# EUROPÄISCHE PATENTANMELDUNG

(11) **EP 0 838 950 A1**
(43) Veröffentlichungstag der Anmeldung: **29.04.1998**
(21) Anmeldenummer: 96440091.5
(22) Anmeldetag: 23.10.1996
(51) Int. Cl.: H04N 7/14

(54) **Terminal für Videokommunikation**

(71) Anmelder: ALCATEL ALSTHOM COMPAGNIE GENERALE D'ELECTRICITE, 75008 Paris (FR)
(72) Erfinder: Douhet, Gérard, 67640 Fegersheim (FR)
(74) Vertreter: Knecht, Ulrich Karl, Dipl.-Ing.

(57) **Zusammenfassung**

Schaffung eines Videokommunikationsterminals zum Aufbau eines Videokommunikationssystems, welches kompakt ist, welches leicht zu installieren und leicht zu verschiedenen Orten zu transportieren ist und bei dem trotz Kompaktheit keine EMV Probleme auftreten.

Schaffung eines Terminals (T) für Videokommunikation, welches aus einer elektronisch beweglichen Kamera (C) und aus einer Prozessorkarte (CP) mit einem entsprechenden Videocodec besteht. Das Terminal wird zwischen einen Bildschirm (BS) und ein entsprechendes Telekommunikationsnetz gebracht. Die Kamer (C) ist über eine Fernbedienung (FB) steuerbar und beinhaltet einen Autofocus. Zur Unterdrückung der EMV werden spezielle Abschirmungen (B) vorgesehen, die u. a. die Kamera (C) von der Prozessorkarte (CP) trennen. Das Terminal (T) kann auf dem Bildschirm (BS) angeordnet werden.

## Beschreibung

Allgemein bekannt sind Terminals für Videokommunikation, die aus einem einzelnen (Stand-Alone) Gerät bestehen. Ein solches Gerät hat eine integrierte Kamera, einen Bildschirm, einen Anschluß zu einem Telekommunikationsnetz und verfügt über entsprechende Codierer/Decodierer. Solche Geräte sind hauptsächlich für die Videokommunikation, also die Bildtelefonie ausgelegt, es kann mit ihnen aber auch ohne Bildübertragung und ohne Bildempfang telefoniert werden. Solche Geräte sind aber verhältnismäßig teuer und müssen in kompletter Ausführung angeschafft werden (Alcatel 2838: 'See the world from your desktop', Firmenprospekt, 09/1994).

Der Erfindung liegt die Aufgabe zugrunde, ein Terminal für Videokommunikation zu schaffen, das leicht zu installieren ist und kostengünstig und leicht handhabbar ist.

Eine weitere Aufgabe der Erfindung ist es, das Terminal für Videokommunikation kompakt und handlich zu gestalten.

Dies wird erfindungsgemäß gelöst durch die Lehre des Anspruchs 1.

Vorteilhaft erweist sich hierbei, daß ein solches Gerät entsteht, das schnell an beliebigen Orten installiert werden kann und bereits vorhandene Mittel, wie z.B. einen bereits vorhandenen Bildschirm ausnutzt, und das lediglich noch ein kleines weiteres Gerät installiert werden muß, um dennoch hochqualitative Bildtelefonie durchzuführen.

Vorteilhaft erweist sich hierbei, daß ein derart kompaktes Gerät entsteht, welches alle wichtigen Funktionen in dem Terminal selbst vereinigt und dennoch keine Probleme mit EMV aufweist.

Ebenfalls vorteilhaft erweist sich, daß die Kamera mittels Motoren schwenkbar angeordnet ist und in zwei senkrecht zueinander stehenden Achsen beweglich angeordnet ist und somit in der Lage ist, ein optimales Bild von jedem beliebigen Benutzer aufzunehmen und zu übertragen.

Weitere vorteilhafte Ausgestaltungen sind den Unteransprüchen 2 bis 7 zu entnehmen.

Gemäß Patentanspruch 2 ergibt sich in vorteilhafter Weise, daß zusätzliche Geräte leicht anschließbar sind und somit das Terminal für Videokommunikation beliebig erweiterbar ist.

Gemäß Patentanspruch 3 ergibt sich in vorteilhafter Weise, daß ein Lautsprecher dazu vorgesehen ist, direkt anzuzeigen, daß ein Anrufer einen Ruf gesendet hat und eine Bildkommunikation aufzunehmen wünscht. Somit können Telefongespräche auch direkt über das Terminal für Videokommunikation geführt werden. Zusätzlich vorteilhaft erweist sich hierbei, daß keine weiteren Lautsprecher vorgesehen werden müssen, wenn der bereits vorhandene Lautsprecher genutzt wird.

Nach Patentanspruch 4 ergibt sich in vorteilhafter Weise, daß eine gute und zuverlässige EMV-Abschirmung erfolgt.

Vorteilhaft erweist sich bei Patentanspruch 5, daß das Terminal für Videokommunikation über eine Fernbedienung steuerbar ist. Dies kann eine handelsübliche Fernbedienung eines TV-Endgerätes sein.

Im folgenden wird die Erfindung anhand von Ausführungsbeispielen und der Figuren näher erläutert. Folgende Figuren zeigen:
- Figur 1:: Schnitt durch das Terminal für Videokommunikation,
- Figur 2:: Schematische Darstellung eines Terminals für Videokommunikation in der Anwendung als Bildtelefon,
- Figur 3:: Prozessorkarte und deren Anbindung an das Terminal.

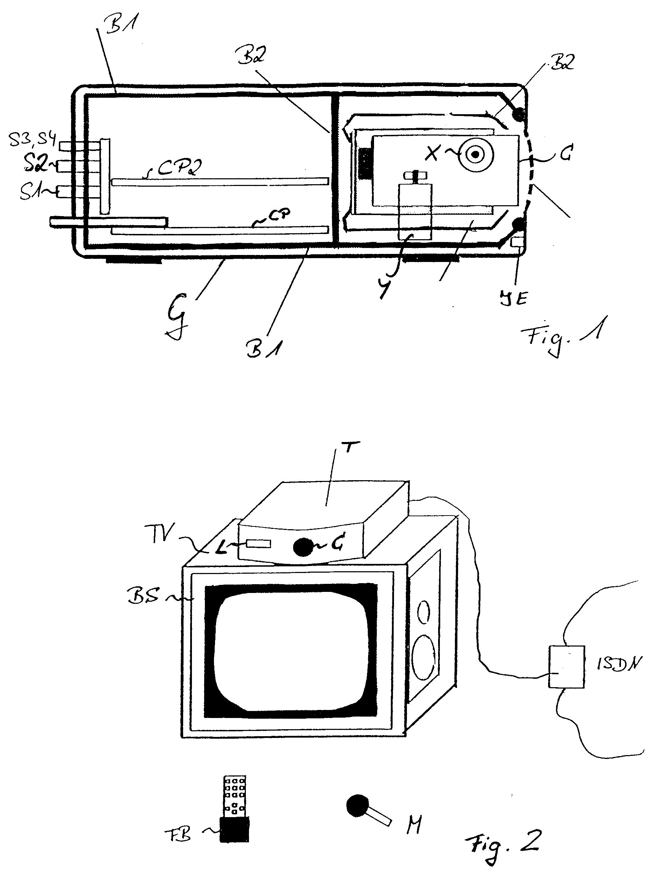

Im folgenden wird die Erfindung anhand von Figur 1 näher erläutert. Ein Terminal T für Videokommunikation weist eine Kamera C auf. An der Kamera C sind Motoren X, Y zur Bewegung der Kamera C in zwei Bewegungsrichtungen angebracht. Hierbei bewegt beispielsweise der Motor Y die Kamera in vertikaler Richtung und der Motor X die Kamera senkrecht dazu in horizontaler Richtung. Dadurch, daß die zwei Motoren X, Y die Kamera in zwei senkrecht zueinander stehende Bewegungsrichtungen bewegen, kann die Kamera in beliebige Raumrichtungen bewegt werden. Zusätzlich kann die Kamera die Funktion eines Zooms und des Autofocus, also der automatischen Focussierung ausführen, sodaß ein Aufzunehmender scharf gestellt wird und ein scharfes Bild übertragen wird. Desweiteren weist das Terminal T für Videokommunikation einen Empfänger IE zum Empfang von Steuersignalen zur Steuerung der Kamera und Motoren auf. Dieser Empfänger IE, zum Beispiel ein Infrarot-Empfänger, setzt beispielsweise von einer Fernsteuerung abgegebene Signale in Steuerungssignale für die Kamera und für die Motoren um.

Desweiteren weist das Terminal T für Videokommunikation eine erste Schnittstelle S1 zum Anschluß des Terminals T an ein Kommunikationsnetz ISDN auf. Das Terminal T für Videokommunikation weist weiterhin eine zweite Schnittstelle S2 zum Anschluß des Terminals T an einen Bildschirm BS auf. Das Terminal T für Videokommunikation kann beispielsweise an einen Bildschirm eines PC's oder an einen Bildschirm eines TV-Endgerätes, also einen TV-Bildschirm, angeschlossen werden.

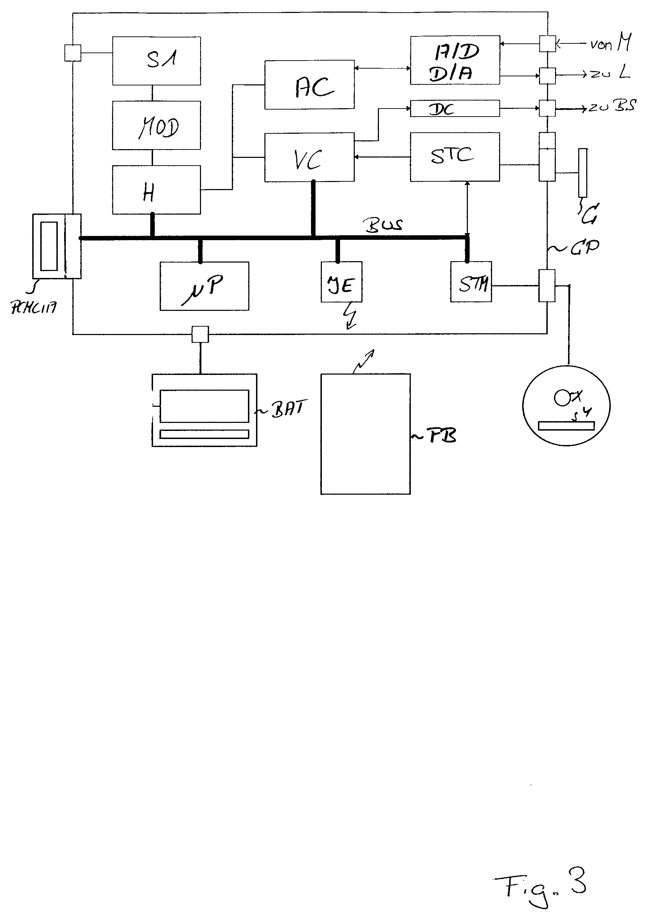

Das Terminal T für Videokommunikation hat weiterhin eine Prozessorkarte CP zur Durchführung von Videocodierungen/- und Decodierungen und von Audiocodierungen/- und Decodierungen. Desweiteren befinden sich noch weitere Bauelemente auf der Karte, die aber im späteren Verlauf anhand von Figur 3 noch näher erläutert werden. Neben dieser Prozessorkarte CP können weitere Karten CP2 vorgesehen sein. Diese weiteren Karten CP2 können beispielsweise parallel zu der Prozessorkarte CP eingeführt sein und dienen der Bereitstellung weiterer Funktionen.

Das Terminal T für Videokommunikation weist weiterhin eine EMV-Abschirmung B1,B2 auf, die innerhalb des Terminals T Hochfrequenzteile von anderen Teilen abschirmt und die Hochfrequenzteile ebenfalls vor Abstrahlung nach außen abschirmt. Die EMV-Abschirmung B1 umhüllt die ganze zuvor beschriebene Vorrichtung, wobei lediglich die Schnittstellen nach außen durchführbar sind. Diese erste EMV-Abschirmung besteht wenigstens teilweise aus durchsichtigem Material. Dieses ist vor der Kameralinse angebracht, damit Aufnahmen durch das durchsichtige Material hindurch gemacht werden können. Zusätzlich weist die EMV-Abschirmung eine zweite EMV-Abschirmung B2 auf, die innerhalb des Terminals T den Hochfrequenzteil von den anderen Teilen abschirmt. Diese umschließt demgemäß Motor X und Motor Y und Kamera vollständig, also alle beweglichen Teile. In der Figur 1 ist dies zweiteilig dargestellt. Hierbei wird die Prozessorkarte CP mit der Kamera durch einen Schlitz in der EMV-Abschirmung B2 verbunden. Typischerweise ist die EMV-Abschirmung aus einem Material hoher Leitfähigkeit. Typischerweise werden dazu dünne Folien oder Platten aus Eisen oder galvanisiertem Eisen oder aus Kupfer oder aus Aluminium verwendet. Für den Fall, daß das Terminal T für Videokommunikation in Form einer Set-Top-Box ausgebildet ist, wird zusätzlich ein Gehäuse G vorgesehen. Neben der ersten Schnittstelle S1 zum Anschluß des Terminals und neben der zweiten Schnittstelle S2 können noch weitere Schnittstellen S3,S4 zum Anschluß beispielsweise eines Videorecorders und/oder einer weiteren Kamera und/oder eines Datenverarbeitungsendgerätes vorgesehen sein. Dies dient der zusätzlichen Erweiterbarkeit des Gerätes und dem zusätzlichen Komfort.

Im folgenden wird die Figur 2 näher erläutert und zeigt einen Gesamtaufbau zur Verwendung aus Terminals T zur Videokommunikation. In der Figur dargestellt ist das Terminal T für Videokommunikation in Form einer Set-Top-Box. Anstelle einer Set-Top-Box kann auch eine solche Ausführung vorgesehen werden, bei der das erfindungsgemäße Terminal in ein Gehäuse mit Bildschirm eingebaut werden kann, oder aber eingesteckt werden kann. Das Terminal T für Videokommunikation - im folgenden Set-Top-Box T genannt - ist über eine Anschlußleitung mit dem Kommunikations-Netz ISDN verbunden. Wie zuvor erläutert, wird die Set-Top-Box T mit einem Bildschirm BS ebenfalls verbunden. Hier ist beispielsweise ein Bildschirm BS eines TV-Endgerätes TV dargestellt. Zusätzlich dargestellt ist eine Fernbedienung FB zur Steuerung der Set-Top-Box T und zur Ansteuerung des TV-Endgerätes TV. Ebenfalls dargestellt ist ein Mikrofon M, das hier der Set-Top-Box T zugeordnet ist, aber nicht innerhalb des Gerätes vorgesehen ist. Somit wird es einem Benutzer des Gerätes ermöglicht, auch von seinem weiter entfernten Platz aus die Set-Top-Box zu steuern.

Im folgenden wird (ohne Figur) eine mögliche Verwendung des Terminals T für Videokommunikation, also der Set-Top-Box T erläutert. Ein Nutzer der Set-Top-Box T schaltet über seine Fernbedienung FB die Set-Top-Box T, das Fernsehgerät TV und demgemäß auch den Bildschirm BS zu. Für den Fall eines ankommenden Rufes ertönt über einen Lautsprecher L in dem Terminal T ein Anrufsignal. Wahlweise kann aber auch auf dem Bildschirm ein Text oder eine Identifikation des Anrufenden gezeigt werden. Der Nutzer kann wiederum über die Fernbedienung FB den Ruf annehmen.

Der Lautsprecher L kann auch wahlweise nicht innerhalb der Set-Top-Box T vorgesehen sein, sondern vielmehr über den vorhandenen Lautsprecher in einem TV-Endgerät TV. Wird ein ankommender Ruf angenommen, so erfolgt die Bildausgabe über den Bildschirm BS. Ein Bild des angerufenen Teilnehmers wird mittels der Kamera C aufgenommen und ebenfalls über das Kommunikation-Netz ISDN zu dem weiteren Teilnehmer übertragen. Zur Veränderung der Position der Kamera C dient wiederum die Fernbedienung FB, die der Steuerung der Motoren X,Y dient, die an der Kamera C angeordnet sind. Diese sind beispielsweise in die X- und Y-Achse schwenkbar ausgerichtet. Zusätzlich erfolgt eine Scharfstellung des aufgenommenen Bildes durch Einsatz eines Zooms und/oder einer manuellen Focussierung oder eines Autofocus. In dem Bildschirm BS kann ein Eigenbild erzeugt werden, so daß ein Teilnehmer seine eigene Aufnahme bezüglich Schärfe, Ausleuchtung, Ausrichtung usw. kontrollieren kann.

Im folgenden wird anhand von Figur 3 die Prozessorkarte CP des Terminals für Videokommunikation T näher erläutert. Eine Prozessorkarte CP weist einen Prozessor µP, einen Infrarotempfänger IE, eine Steuerung STM für Motoren einer Kamera X, Y, einen Videocodec VC, eine Anpassungsschaltung H und eine Steuerung STC für eine Kamera C auf. Diese vorgenannten Bauteile sind alle über einen Bus BUS miteinander verbunden. Die Steuerungsschaltung STM der Motoren X,Y greift auf die außerhalb der Prozessorkarte CP gelegenen Motoren X,Y zu deren Steuerung zu. Der Videocodec VC arbeitet beispielsweise nach dem ITU Standard H.261 oder H.263. Neben dem Videocodec VC ist ebenfalls ein Audiocodec AC vorgesehen. Dieser kann beispielsweise nach dem ITU Standard G.711 oder G.728 oder G.723 oder G.722 arbeiten. Über eine erste Schnittstelle S1 ist ein Anschluß zu einem Kommunikationsnetz, beispielsweise dem ISDN-Netz, herstellbar. Eintreffende oder abgehende Signale werden weiter mittels einem Modem MOD angepaßt und verarbeitet. Dieses kann beispielsweise ein analoges Modem sein oder ein digitales Modern zur Anpassung an ein ISDN-Telekommunikationsnetz. Die ein- oder abgehenden Bild- und Audiosignale werden weiterhin auf die Anpassungsschaltung H gegeben, die die Verständigung der kommunizierenden Videophones untereinander regelt. Diese Anpassungsschaltung H arbeitet beispielsweise nach dem ITU-Standard H.221 bei Einsatz eines digitalen Modems oder nach dem ITU-Standard H.223 bei Einsatz eines analogen Modems. Von dort aus gelangen Bildsignale parallel auf den Videocodec VC und auf den Audiocodec AC zur Codierung bzw. entsprechend zur Decodierung von Audio- und Videosignalen. Über den Audiocodec AC codierte oder decodierte Audiosignale werden auf ein Analog/Digital-Wandler A/D gegeben bzw. kommen von dem Digital-Analog-Wandler D/A. Eingehende Audiosignale kommen von einem außerhalb angeordneten Mikrofon M oder abgehende Audiosignale werden auf einen Lautsprecher L gegeben. Zur Ausgabe der codierten Videosignale werden die Bilddaten auf einen Decoder DC gegeben und von dort in Richtung Bildschirm BS gegeben.

Der Empfänger IE zur Steuerung der Kamera und der Motoren und zur Steuerung des TV-Endgerätes mit Bildschirm empfängt Signale von einer außerhalb angeordneten Fernbedienung FB. Zusätzlich ist noch eine Spannungsversorgung BAT der Prozessorkarte CP vorgesehen. Die Spannungsversorgung BAT dient der Bereitstellung einer Spannungsversorgung für die Prozessorkarte CP.

Zusätzlich kann an der Prozessorkarte eine Einsteckmöglichkeit zum Einstecken einer PCMCIA-Karte PCMCIA, also einer Speicherkarte zur Erweiterung des Speichers vorgesehen sein. Ist eine PCMCIA-Karte PCMCIA eingesteckt, so ist sie über den Bus BUS mit den anderen Mitteln verbunden. Demgemäß kann von dem Prozessor µP aus, ein direkter Zugriff auf den Speicher erfolgen. Dies dient zum Lesen oder zum Beschreiben des Speichers. Neben der Verwendung der PCMCIA-Karte können auch andere Karten oder Speichererweiterungen vorgesehen werden.

## Patentansprüche

1. Terminal (T) für Videokommunikation mit
- einer Kamera (C) und mit Motoren (X,Y), zur Bewegung der Kamera (C) in zwei Bewegungsrichtungen,
- einem Empfänger (IE) zum Empfang von Steuersignalen zur Steuerung der Kamera und der Motoren,
- einer ersten Schnittstelle (S1) zum Anschluß des Terminals (T) an ein Kommunikationsnetz (ISDN) und mit einer zweiten Schnittstelle (S2) zum Anschluß des Terminals (T) an einen Bildschirm (BS),
- mit einem Mikrofon (M),
- mit einer Prozessorkarte (CP) zur Durchführung von Videocodierungen/- und Decodierungen und von Audiocodierungen/- und Decodierungen und
- mit einer EMV-Abschirmung (B1, B2) die innerhalb des Terminals (T) Hochfrequenzteile von andereren Teilen abtrennt und die die Hochfrequenzteile vor Abstrahlung nach außen abschirmt.

2. Terminal nach Anspruch 1, mit mindestens einer weiteren Schnittstelle (S3, S4) zum Anschluß eines Videorecorders und/oder einer weiteren Kamera und/oder eines Datenverarbeitungsendgerätes.

3. Terminal nach Anspruch 1 oder 2, mit einem Lautsprecher (L) zur Ausgabe eines Ruftones eines anrufenden Teilnehmers und zur Ausgabe von Audiosignalen während einer Videokommunikation.

4. Terminal nach Anspruch 1, mit einer ersten EMV-Abschirmung (B1), die das Terminal (T) vollständig umschließt und wenigstens teilweise aus durchsichtigem Material besteht und mit einer zweiten EMV-Abschirmung (B2), die innerhalb des Terminals (T) den Hochfrequenzteil von den anderen, aus beweglichen Elementen bestehenden Teilen abschirmt.

5. Terminal nach Anspruch 1, mit einem Infrarotsender (IS) zum Senden von Steuersignalen an den Emfpänger (IE) zur Steuerung der Kamera und zur Steuerung des Terminals (T).

6. Terminal nach einem der Ansprüche 1 bis 5, bei dem das Terminal in Form einer Set-Top-Box ausgebildet ist.

7. Terminal nach einem der Ansprüche 1 bis 5, bei dem das Terminal direkt in ein Gehäuse des Bildschirmes (BS) eingebaut wird oder bei dem das Terminal in das Gehäuse des Bildschirmes (BS) eingesteckt wird.
